# EUROPÄISCHE PATENTSCHRIFT

(11) **EP 2 315 925 B1**
(45) Veröffentlichungstag und Bekanntmachung des Hinweises auf die Patenterteilung: **24.12.2014**
(21) Anmeldenummer: 09781892.6
(22) Anmeldetag: 17.08.2009
(51) Int. Cl.: F01N 13/18, F01N 3/20, F16L 51/02

(54) **SCR-SYSTEM MIT KOMPENSATIONSELEMENT**
SCR SYSTEM WITH COMPENSATION ELEMENT
SYSTÈME DE RCS COMPRENANT UN ÉLÉMENT DE COMPENSATION

(30) Priorität: 28.08.2008 DE 102008044708
(43) Veröffentlichungstag der Anmeldung: 04.05.2011
(73) Patentinhaber: Emitec Gesellschaft für Emissionstechnologie mbH, 53797 Lohmar (DE)
(72) Erfinder: HODGSON, Jan, 53840 Troisdorf (DE); BRÜCK, Rolf, 51429 Bergisch Gladbach (DE)
(74) Vertreter: Rössler, Matthias
(86) Internationale Anmeldenummer: PCT/EP2009/060600
(87) Internationale Veröffentlichungsnummer: WO 2010/023124

(56) Entgegenhaltungen:
- EP-A2- 1 728 984
- WO-A1-2005/103459
- WO-A1-2006/136306
- WO-A1-2009/068186
- DE-A1-102005 029 290
- DE-A1-102007 039 424

## Beschreibung

Die vorliegende Erfindung betrifft ein SCR-System mit einem Kompensationselement.

Im Hinblick auf geltende und in naher Zukunft weiter verschärfte Emissionsgrenzwerte für Abgase von Verbrennungsmotoren werden in Nutz- und Kraftfahrzeugen in verstärktem Maße SCR-Systeme zur Abgasreinigung eingesetzt. Dabei werden Reduktionsmittel in verschiedener Ausführung eingesetzt, insbesondere in Form von Reduktionsmittelvorläufern, die zumeist als wasserhaltige Lösung vorliegen (Denoxium, AdBlue). Beim Einsatz der SCR-Technologie ist daher zu beachten, dass bei niedrigen Umgebungstemperaturen oder auch durch Abkühlungseffekte in Folge von Konvektion ein Einfrieren des Reduktionsmittels möglich ist. Durch die Volumenvergrößerung infolge des Phasenübergangs des Reduktionsmittels können Komponenten des SCR-System, z. B. Fördereinrichtungen, Filter, Reduktionsmittelleitungen, Ventile, beschädigt werden.

Dabei sind flexible Reduktionsmittelleitungen oder Reduktionsmittelleitungen mit Volumen-Kompensationselementen bekannt, die infolge des Eisdruckes des gefrorenen Reduktionsmittels bzw. Reduktionsmittelvorläufers das Volumen der Reduktionsmittelleitung vergrößern. Es sind z. B. Druckspeicher bekannt, die mittels federbelasteter Membranen ein durchströmtes Volumen vergrößern bzw. verkleinern können, vergleiche beispielsweise die Vorrichtung aus der EP 0 953 739 A2. Dabei ist allerdings zu beachten, dass bei dem Einsatz von SCR-Systemen in PKW oder Nutzfahrzeugen lange Einsatzzeiten vorliegen, während denen solche Systeme weitgehend wartungsfrei betrieben werden sollen. Insbesondere mehrteilige Druckspeicher sind vor diesem Hintergrund als teuer in der Herstellung, störanfällig und wartungsanfällig einzuschätzen. Ferner beschreibt das Dokument WO 2006/136 306 die Merkmale des Oberbegriffs des Anspruchs 1.

Aus der WO 2006/136306 A1 ist ein Reduktionsmittelversorgungssystem mit Leitungen bekannt, wobei die Leitungen von Metallrohren gebildet sind. Diese Metallrohre können einen von der Kreisform abweichenden, vorzugsweise ovalen oder elliptischen Querschnitt aufweisen. Wenn Harnstofflösung in einem derartigen Metallrohr einfriert, so führt die auftretende Volumenausdehnung dazu, dass sich der Querschnitt des Metallrohrs der Kreisform annähert und sich die Querschnittsfläche des Querschnitts so vergrößert. In der WO 2006/136306 A1 ist als weitere Ausführungsvariante vorgeschlagen, dass in den Metallrohren volumenelastische Ausgleichselemente angeordnet sind, die beim Einfrieren von umgebender Harnstofflösung komprimiert werden, um eine Volumenausdehnung der Harnstofflösung auszugleichen.

Aufgabe der Erfindung ist es daher, die mit Bezug auf den Stand der Technik geschilderten Probleme zumindest teilweise zu lösen und insbesondere ein Kompensationselement für ein SCR-System bereitzustellen, das möglichst verschleiß- und damit wartungsfrei ist und über lange Zeit ohne Beeinträchtigung der Funktion des Kompensationselementes im SCR-System für Verbrennungskraftmaschinen eingesetzt werden kann. Weiterhin sollte das Kompensationselement möglichst wenige Komponenten aufweisen, modular einsetzbar sein und geringe Kosten in der Herstellung erzeugen.

Diese Aufgaben werden gelöst durch ein SCR-System gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die Merkmale in den abhängig formulierten Patentansprüchen in beliebiger, technologisch sinnvoller, Weise kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Vorliegend wird die Aufgabe durch ein SCR-System gelöst, wobei das SCR-System zur Förderung und Leitung eines Reduktionsmittels wenigstens einen Reduktionsmitteltank, einen Filter, eine Fördereinrichtung sowie eine Reduktionsmittelleitung umfasst. Dabei weist das SCR-System zumindest ein Kompensationselement mit einem von dem Reduktionsmittel durchströmten Volumen auf, das geeignet ist, das Volumen in Abhängigkeit eines Reduktionsmitteldruckes zu verändern, wobei das Kompensationselement einteilig und metallisch ist, wobei das Kompensationselement zumindest eine unter Vorspannung stehende Teilfläche aufweist, wobei die Teilfläche bei einem bestimmten Reduktionsmitteldruck entgegen der Vorspannung bewegbar ist, so dass sich das durchströmte Volumen des Kompensationselementes vergrößert und wobei sich das Volumen des Kompensationselementes bei einem bestimmten Druckpunkt des Reduktionsmittels schlagartig ändert.

Das einteilige Kompensationselement ist dabei insbesondere eine einzelne Komponente, die in das SCR-System integriert werden kann. Einteilig bedeutet hier, dass das Kompensationselement aus mehreren aber stoffschlüssig miteinander verbundenen Einzelteilen bestehen kann oder insbesondere aus einem einzigen Teil herstellbar ist. Einteilig ist dementsprechend keine Baugruppe, die aus mehreren zueinander beweglichen Einzelteilen besteht, wobei die Einzelteile nur kraftschlüssig oder formschlüssig miteinander verbunden sind. Als Material für das Kompensationselement sind Metalle und metallische Legierungen geeignet, insbesondere auch Aluminium und Aluminiumlegierungen.

Das Kompensationselement ist insbesondere mit den weiteren Komponenten des SCR-Systems wie z. B. Tank, Filter, Fördereinrichtung, Reduktionsmittelleitung und/oder Zugabeeinheit fest verbunden bzw. in diese Komponenten integriert. Dabei sind bevorzugt Verbindungen zu den Komponenten vorzusehen, die ggf. zusätzliche (insbesondere abdichtende) Elemente umfassen, die im Sinne der vorliegenden Erfindung nicht dem Kompensationselement zuzuordnen sind.

Insbesondere ist das Kompensationselement geeignet, eine Volumenänderung des Reduktionsmittels, insbesondere infolge einer Vereisung oder eines anderen Phasenüberganges, entweder vollständig oder wenigstens zum Teil alleine oder im Zusammenspiel mit weiteren Kompensationselementen soweit aufzunehmen, dass Beschädigungen von weiteren Komponenten des SCR-Systems verhindert werden können.

In Weiterbildung der Erfindung wird vorgeschlagen, dass das Kompensationselement in Form eines Faltenbalges gestaltet ist. Dabei kann das Kompensationselement z.B. einen runden, ellipsenförmigen oder auch rechteckigen oder polygonalen Querschnitt aufweisen, der durch die Volumenänderung des Kompensationselementes infolge der Falten im Wesentlichen konstant bleibt. Bevorzugt ist dabei eine Ausführungsform des Faltenbalges, bei der die Falten in Strömungsrichtung des Reduktionsmittels durch das Kompensationselement hintereinander angeordnet sind, so dass sich das Kompensationselement verlängert und damit sein Volumen vergrößert.

Erfindungsgemäß weist das Kompensationselement zumindest eine unter Vorspannung stehende Teilfläche auf, wobei die Teilfläche bei einem bestimmten Reduktionsmitteldruck entgegen der Vorspannung bewegbar ist, so dass sich das durchströmte Volumen des Kompensationselementes vergrößert. Dabei kann nicht nur eine Teilfläche des Kompensationselementes unter Vorspannung stehen, sondern auch die gesamte Umfangsfläche des Kompensationselementes, die ab einem bestimmten Innendruck ähnlich einem so genannten Knackfrosch die Vorspannung umkehrt und sich schlagartig bei einem bestimmten Druckpunkt vergrößert. Hierdurch sind Kompensationselemente bezeichnet, die ihr Volumen schlagartig bei einem bestimmten Druckpunkt ändern, im Gegensatz zu Kompensationselementen, wie dem bereits erwähnten Faltenbalg, der sein Volumen ab einem bestimmten Reduktionsmitteldruck insbesondere kontinuierlich vergrößert bzw. verkleinert. Dabei liegt der Innendruck Druckpunkt bevorzugt oberhalb des Betriebsdruckes des SCR-Systems.

Ferner ist es vorteilhaft, dass sich das Kompensationselement bis zu einem Reduktionsmitteldruck von mindestens 5 bar, bevorzugt mindestens 10 bar, steif verhält und bei weiter ansteigendem Druck sich das Volumen des Kompensationselementes wesentlich vergrößert. Steif bedeutet hier, dass sich das Volumen des Kompensationselementes bis zu dem genannten Reduktionsmitteldruck nur um höchstens 1 % verändert. Das Kompensationselement ist geeignet, das Volumen um mindestens 5 %, bevorzugt mindestens 10 % und besonders bevorzugt mindestens 20 % zu vergrößern. Dies ist im wesentlichen auch abhängig von der Bauform. Kompensationselemente in Form eines Faltenbalges weisen mögliche Vergrößerungen des Volumens von mindestens 50 %, insbesondere um mindestens 70 % auf während Kompensationselemente mit beweglichen Teilflächen abhängig von der Größe der Teilfläche das Volumen nur um mindestens 5 %, insbesondere mindestens 10 % vergrößern können. Dabei ist insbesondere die metallische Ausführung des Kompensationselementes von Vorteil, die eine ausreichende Steifigkeit des Kompensationselementes ermöglicht, so dass keine wesentliche Volumenänderung des SCR-Systems infolge einer Volumenvergrößerung der Kompensationselemente durch den Betriebsdruck des Reduktionsmittels ermöglicht wird. In diesem SCR-System tritt regelmäßig ein Betriebsdruck von ca. 8 bar auf. Bis zum oben angegebenen maximalen Betriebsdruck sollte keine wesentliche Volumenänderung des SCR-Systems erfolgen. Damit wird eine genaue Regelung des Reduktionsmittelflusses in den Reduktionsmittelleitungsvolumina, in den Fördereinheiten, durch Zugabeeinheiten und durch die Ventile ermöglicht. Durch Kompensationselemente der vorgeschlagenen Art wird dementsprechend die Genauigkeit des SCR-Systems hinsichtlich des Reduktionsmitteldruckes im SCR-System und der Dosierung des Reduktionsmittels in den Abgasstrom deutlich erhöht. Ganz besonders bevorzugt ist das Kompensationselement zwischen dem Filter und einer Zugabeeinheit angeordnet.

Bei einer anderen Weiterbildung der Erfindung ist das Kompensationselement mit zumindest einer Komponente des SCR-Systems aus der Gruppe Reduktionsmitteltank, Filter, Fördereinrichtung, Reduktionsmittelleitung, Zugabeeinheit, durch eine Schraubverbindung verbunden. Als Zugabeeinheit wird die Komponente des SCR-Systems bezeichnet, durch die das Reduktionsmittel insbesondere in eine Abgasleitung überführt wird. Dabei kann das Kompensationselement insbesondere auch mit einzelnen Komponenten stoffschlüssig verbunden sein, so dass ggf. erforderliche zusätzliche Abdichtungsmaßnahmen nicht benötigt werden. Dies ist insbesondere bei einer Integration des Kompensationselementes in eine Komponente des SCR-Systems (wie die Fördereinrichtung oder der Filter) vorteilhaft. Insbesondere ist dabei zu beachten, dass infolge der weitgehenden Wartungsfreiheit dieses Kompensationselementes ein Austausch der jeweiligen Komponente eher erforderlich ist als ein Austausch des Kompensationselementes infolge einer Funktionsstörung.

Dementsprechend ist es besonders vorteilhaft, dass zumindest ein Kompensationselement in einer Komponente des SCR-Systems vorgesehen ist, wobei als Komponenten insbesondere Reduktionsmitteltank, Filter, Fördereinrichtung, Reduktionsmittelleitung oder Zugabeeinheit zu nennen sind.

Weiterhin besonders vorteilhaft ist das erfindungsgemäße SCR-System, wenn das Volumen des Kompensationselementes derart dimensioniert ist, dass es die gesamte beim Einfrieren auftretende Volumenzunahme des Reduktionsmittels im SCR-System aufnehmen kann. Wenn das Volumen des Kompensationselementes derart dimensioniert ist, tritt beim Einfrieren des Reduktionsmittels im SCR-System keine Schädigung des SCR-Systems auf, auch wenn die übrigen mit Reduktionsmittel gefüllten Komponenten des SCR-Systems, z.B. die Fördereinrichtungen, Filter, Reduktionsmittelleitungen oder Ventile, im Wesentlichen keine Volumenänderungskompensationsfähigkeit haben.

Ein derart dimensioniertes Kompensationselement sollte in einem SCR-System bevorzugt im Hochdruckbereich zwischen der Fördereinrichtung und der Zugabeeinheit angeordnet sein. In diesem Bereich steht das Reduktionsmittel im Betrieb unter Druck, so dass hier eine Kompensation der Volumenzunahme am wichtigsten ist. Darüber hinaus weist die Fördereinrichtung regelmäßig Ventile auf, so dass zwischen Fördereinrichtung und Zugabeeinheit ein abgeschlossener Teilabschnitt existiert, in dem die Expansion beim Einfrieren stattfindet. Insbesondere sollte das Kompensationselement nahe an der Fördereinrichtung angeordnet sein, weil dann ein Einfrieren ausgehend von der Zugabeeinheit durch die Leitungen hin zur Pumpe in das SCR-System hinein erfolgen kann, so dass sich das Kompensationselement bis zum vollständigen Einfrieren weiter ausdehnen kann.

Die Verwendung nicht dehnbarer (starrer, im Wesentlichen inkompressibler) Komponenten im erfindungsgemäßen SCR-System ist unter Anderem vorteilhaft, weil Sie eine Volumenzunahme des erfindungsgemäßen SCR-Systems im Betrieb verhindern. Hierdurch wird der für die Erzeugung des Betriebsdruckes erforderliche Energieaufwand reduziert, weil im Betrieb kein zusätzliches Volumen mit Reduktionsmittel gefüllt werden muss. Zusätzlich erleichtert sich die Regelbarkeit des erfindungsgemäßen SCR-Systems und solche nicht dehnbaren Komponenten sind häufig kostengünstiger. Auch ist ihre Beständigkeit teilweise gegenüber dem Reduktionsmittel höher.

Auch besonders vorteilhaft ist das erfindungsgemäße SCR-System, wenn das SCR-System ein Systemvolumen aufweist, welches durch das Kompensationselement um ein Expansionsvolumen vergrößert werden kann, wobei das Expansionsvolumen zwischen 2 % und 15 %, insbesondere zwischen 3 % und 10 % des Systemvolumens beträgt. Mit Systemvolumen ist hier das gesamte im Betrieb mit Reduktionsmittel gefüllte Volumen des SCR-Systems gemeint (bei normalen Bedingungen, insbesondere Raumtemperatur). Hierzu wird auch das gegebenenfalls vorhandene, bauartbedingte Volumen des nicht expandierten Kompensationselementes gezählt. Beispielsweise hat ein als Faltenbalg ausgeführtes Kompensationselement auch im nicht expandierten Zustand ein Volumen, welches mit Fluid gefüllt ist und zum Systemvolumen zu zählen ist. Mit Expansionsvolumen ist das Volumen gemeint, um welches das Kompensationselement sich bei der Expansion vergrößert. Es hat sich herausgestellt, dass ein Expansionsvolumen welches zwischen 2 % und 15 % und insbesondere zwischen 3 % und 10 % des Systemvolumens beträgt besonders geeignet ist, die Volumenausdehnung des Reduktionsmittels im SCR-System beim Einfrieren aufzunehmen.

Je nach der Gesamtlänge der Leitungen des erfindungsgemäßen SCR-Systems ist es besonders vorteilhaft, wenn das Expansionsvolumen zwischen 2 ml und 5 ml groß ist.

Die Erfindung sowie das technische Umfeld werden nachfolgend anhand der Figuren näher erläutert. Es ist darauf hinzuweisen, dass die Figuren besonders bevorzugte Ausführungsvariante der Erfindung zeigen, auf diese jedoch nicht beschränkt ist. Es zeigen schematisch:
- Fig. 1:: ein Kraftfahrzeug mit einem SCR-System;
- Fig. 2:: ein Kompensationselement in Form eines Faltenbalges;
- Fig. 3:: ein Kompensationselement gemäß Fig. 2 mit vergrößertem Volumen; und
- Fig. 4:: ein weiteres Kompensationselement mit einer bewegbaren Teilfläche.

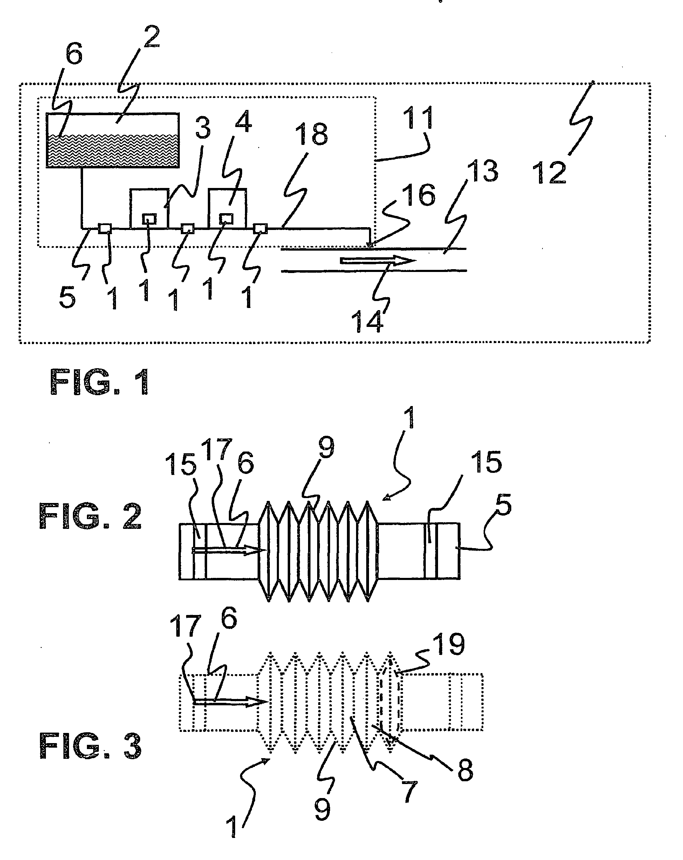

Fig. 1 zeigt schematisch ein Kraftfahrzeug 12 mit einer Abgasleitung 13 und einem SCR-System 11, wobei im SCR-System 11 mögliche aber nicht ausschließliche Einbaupositionen des Kompensationselementes 1 angedeutet sind. Das SCR-System 11 weist zumindest einen Reduktionsmitteltank 2, eine Reduktionsmittelleitung 5, einen Filter 3 und eine Reduktionsmittelfördereinrichtung 4 auf, wobei das Reduktionsmittel 6 einer Zugabeeinheit 16 zugeführt wird, über die das Reduktionsmittel 6 dem Abgasstrom 14 in der Abgasleitung 13 zugeführt wird. Die angedeuteten Kompensationselemente 1 innerhalb des Filters 3 bzw. innerhalb der Fördereinrichtung 4 sollen verdeutlichen, dass die Kompensationselemente 1 in die Baueinheiten des Filters 3 bzw. der Fördereinrichtung 4 integrierbar sind. Dabei können die Kompensationselemente 1 unmittelbar an den Anschlüssen des Filters 3 oder der Fördereinrichtung 4 außerhalb der Gehäuse vorgesehen sein, oder aber insbesondere zusätzlich innerhalb des Gehäuses der jeweiligen Komponente. Das gesamte SCR-System 11 weist im Betrieb ein mit Reduktionsmittel gefülltes Systemvolumen 18 auf.

Fig. 2 zeigt schematisch die Ausführung des Kompensationselementes 1 als Faltenbalg 9, wobei sich der Faltenbalg 9 in Längsrichtung des Kompensationselementes 1 bzw. parallel zur Durchströmungsrichtung 17 des Reduktionsmittels 6 durch das Kompensationselement 1 erstreckt. Weiter sind Schraubverbindungen 15 an den jeweiligen Enden des Kompensationselementes 1 vorgesehen, über die das Kompensationselement 1 insbesondere mit einer Reduktionsmittelleitung 5 verbunden ist.

Fig. 3 zeigt schematisch ein Kompensationselement 1 gemäß Fig. 2 mit einem Faltenbalg 9, wobei hier das Volumen 7 des Faltenbalges 9 infolge eines gestiegenen Reduktionsmitteldruckes 8 um das Expansionsvolumen 19 vergrößert worden ist. Dabei ist das Kompensationselement 1 in Richtung der Durchströmungsrichtung 17 des Reduktionsmittels 6 infolge des Reduktionsmitteldruckes 8 verlängert.

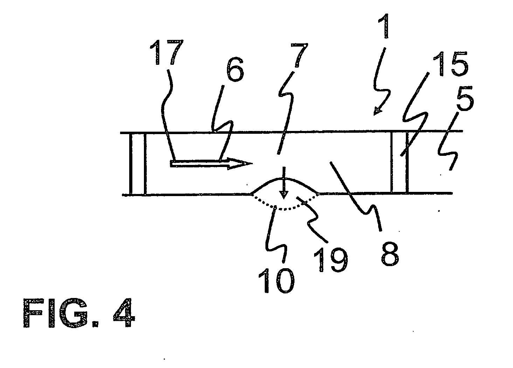

Fig. 4 zeigt schematisch ein Kompensationselement 1, wobei eine Teilfläche 10 an einer Seitenwand des Kompensationselementes 1 vorgesehen ist, die sich infolge eines gestiegenen Reduktionsmitteldruckes 8 in radialer Richtung des Kompensationselementes 1 erweitern kann, so dass sich das Reduktionsmittel 6 (insbesondere nur) in das Expansionsvolumen 19 hinein ausdehnen kann. Diese Vergrößerung des Volumens 7 ist umkehrbar, so dass bei erneut sinkendem Reduktionsmitteldruck 8 innerhalb des Kompensationselementes 1 auch eine Rückbewegung der Teilfläche 10 erfolgt, die das Volumen 7 des Kompensationselementes 1 erneut verringert. Auch hier sind Schraubverbindungen 15 an den jeweiligen Enden des Kompensationselementes 1 vorgesehen, über die das Kompensationselement 1 insbesondere mit einer Reduktionsmittelleitung 5 verbunden ist.

Die Teilfläche 10 kann sich dabei in beliebiger Ausgestaltung entlang des Kompensationselementes 1 erstrecken. Insbesondere ist das gesamte Kompensationselement 1 in Form der Teilfläche 10 gestaltet, so dass eine maximale Volumenvergrößerung möglich ist.

Die einzelnen Ausgestaltungen der Kompensationselemente 1 können insbesondere hinsichtlich ihrer Expansionsrichtung und -art ausgewählt werden. Dabei sind Kompensationselemente 1 mit bewegbaren Teilflächen 10 insbesondere dann vorteilhaft, wenn eine gerichtete Volumenvergrößerung 7 des Kompensationselementes 1 wegen Bauraumeinschränkungen durch andere Komponenten 2, 3, 4, 5, 16 und Elemente des Kraftfahrzeuges 12 einer Volumenvergrößerung 7 des Kompensationselementes 1 entgegenstehen.

### Bezugszeichenliste

- 1: Kompensationselement
- 2: Reduktionsmitteltank
- 3: Filter
- 4: Fördereinrichtung
- 5: Reduktionsmittelleitung
- 6: Reduktionsmittel
- 7: Volumen
- 8: Reduktionsmitteldruck
- 9: Faltenbalg
- 10: Teilfläche
- 11: SCR-System
- 12: Kraftfahrzeug
- 13: Abgasleitung
- 14: Abgasstrom
- 15: Schraubverbindung
- 16: Zugabeeinheit
- 17: Durchströmungsrichtung
- 18: Systemvolumen
- 19: Expansionsvolumen

## Patentansprüche

1. SCR-System (11) mit zumindest einem Kompensationselement (1), wobei das SCR-System (11) zur Förderung und Leitung eines Reduktionsmittels (6) wenigstens einen Reduktionsmitteltank (2), einen Filter (3), eine Fördereinrichtung (4) sowie eine Reduktionsmittelleitung (5) umfasst; das Kompensationselement (1) ein von dem Reduktionsmittel (6) durchströmtes Volumen (7) aufweist und geeignet ist, das Volumen (7) in Abhängigkeit eines Reduktionsmitteldruckes (8) zu verändern, wobei das Kompensationselement (1) einteilig und metallisch ist, dadurch gekenntzeichnet, dass das Kompensationselement (1) zumindest eine unter Vorspannung stehende Teilfläche (10) aufweist, wobei die Teilfläche (10) bei einem bestimmten Reduktionsmitteldruck (8) entgegen der Vorspannun bewegbar ist, so dass sich das durchströmte Volumen (7) des Kompensationselementes (1) vergrößert, und wobei sich das Volumen (7) des Kompensationselementes (1) bei einem bestimmten Druckpunkt des Reduktionsmitteldrucks schlagartig ändert.

2. SCR-System (11) nach Anspruch 1, wobei das Kompensationselement (1) in Form eines Faltenbalges (9) gestaltet ist.

3. SCR-System (11) nach einem der vorhergehenden Ansprüche, wobei das Kompensationselement (1) sich bis zu einem Reduktionsmitteldruck (8) von mindestens 5 bar, bevorzugt mindestens 10 bar, steif verhält und bei weiter ansteigendem Druck sich das Volumen (7) des Kompensationselementes (1) wesentlich vergrößert.

4. SCR-System (11) nach einem der vorhergehenden Ansprüche, wobei das Kompensationselement (1) mit zumindest einer Komponente des SCR-Systems (11) aus der Gruppe Reduktionsmitteltank (2), Filter (3), Fördereinrichtung (4), Reduktionsmittelleitung (5), Zugabeeinheit (16), durch eine Schraubverbindung (15) verbunden ist.

5. SCR-System (11) nach einem der vorhergehenden Ansprüche, wobei Volumen (7) des mindestens einen Kompensationselementes (1) derart bestimmt ist, dass es die gesamte beim Einfrieren auftretende Volumenzunahme des Reduktionsmittels im SCR-System (11) aufnehmen kann.

6. SCR-System (11) nach einem der vorhergehenden Ansprüche, wobei das SCR-System (11) ein Systemvolumen (18) aufweist, welches durch das mindestens eine Kompensationselement (1) um ein Expansionsvolumen (19) vergrößert werden kann, wobei das Expansionsvolumen (19) zwischen 2 % und 15 % des Systemvolumens (18) beträgt.

7. Kraftfahrzeug mit einem SCR-System (11) gemäß den Ansprüchen 1 bis 6.

## Claims

1. SCR system (11) having at least one compensation element (1), wherein to convey and conduct a reducing agent (6), the SCR system (11) has at least one reducing agent tank (2), a filter (3), a conveying device (4) and a reducing agent line (5); the compensation element (1) has a volume (7) through which the reducing agent (6) flows and said compensation element (1) is suitable for varying the volume (7) as a function of a reducing agent pressure (8), with the compensation element (1) being formed in one piece and being metallic, **characterized in that** the compensation element (1) has at least one surface part (10) which is under preload, with the surface part (10) being movable counter to the preload at a certain reducing agent pressure (8), such that the volume (7) of the compensation element (1), through which flow passes, is increased, and wherein the volume (7) of the compensation element (1) changes abruptly at a certain pressure point of the reducing agent pressure.

2. SCR system (11) as claimed in claim 1, wherein the compensation element (1) is designed in the form of a bellows (9).

3. SCR system (11) as claimed in one of the preceding claims, wherein the compensation element (1) behaves rigidly up to a reducing agent pressure (8) of at least 5 bar, preferably at least 10 bar, and the volume (7) of the compensation element (1) increases significantly with further increasing pressure.

4. SCR system (11) as claimed in one of the preceding claims, wherein the compensation element (1) is connected by means of a screw connection (15) to at least one component of the SCR system (11) from the group of reducing agent tank (2), filter (3), conveying device (4), reducing agent line (5), metering unit (16).

5. SCR system (11) as claimed in one of the preceding claims, wherein the volume (7) of the at least one compensation element (1) is defined such that it can accommodate the entire increase in volume of the reducing agent in the SCR system (11) when said reducing agent freezes.

6. SCR system (11) as claimed in one of the preceding claims, wherein the SCR system (11) has a system volume (18) which can be increased by the at least one compensation element (1) by an expansion volume (19), with the expansion volume (19) amounting to between 2% and 15% of the system volume (18).

7. Motor vehicle having an SCR system (11) as claimed in claims 1 to 6.

## Revendications

1. Système RCS (11) comprenant au moins un élément de compensation (1), le système RCS (11) comportant, pour acheminer et guider un agent réducteur (6), au moins un réservoir d'agent réducteur (2), un filtre (3), un dispositif d'acheminement (4) ainsi qu'une conduite d'agent réducteur (5) ; l'élément de compensation (1) présentant un volume (7) parcouru par l'agent réducteur (6) et étant approprié pour faire varier le volume (7) en fonction d'une pression d'agent réducteur (8), l'élément de compensation (1) étant d'un seul tenant et métallique, **caractérisé en ce que** l'élément de compensation (1) comprend au moins une surface partielle (10) sous précontrainte, la surface partielle (10) pouvant être déplacée à l'encontre de la précontrainte à une pression d'agent réducteur déterminée (8), de telle sorte que le volume parcouru (7) de l'élément de compensation (1) soit augmenté, et le volume (7) de l'élément de compensation (1) variant de manière abrupte à un point de pression déterminé.

2. Système RCS (11) selon la revendication 1, dans lequel l'élément de compensation (1) est configuré sous la forme d'un soufflet plissé (9).

3. Système RCS (11) selon l'une quelconque des revendications précédentes, dans lequel l'élément de compensation (1) se comporte de manière rigide jusqu'à une pression d'agent réducteur (8) d'au moins 5 bars, de préférence d'au moins 10 bars, et le volume (7) de l'élément de compensation (1) augmente considérablement lorsque la pression continue à augmenter.

4. Système RCS (11) selon l'une quelconque des revendications précédentes, dans lequel l'élément de compensation (1) est relié, au moyen d'une liaison vissée (15), à au moins un composant du système RCS (11) du groupe constitué du réservoir d'agent réducteur (2), du filtre (3), du dispositif d'acheminement (4), de la conduite d'agent réducteur (5) et de l'unité d'addition (16).

5. Système RCS (11) selon l'une quelconque des revendications précédentes, dans lequel le volume (7) de l'au moins un élément de compensation (1) est déterminé de telle sorte qu'il puisse recevoir l'ensemble de l'augmentation de volume de l'agent réducteur dans le système RCS (11) se produisant lors du gel de celui-ci.

6. Système RCS (11) selon l'une quelconque des revendications précédentes, dans lequel le système RCS (11) présente un volume de système (18) qui peut être augmenté par l'au moins un élément de compensation (1) d'un volume d'expansion (19), dans lequel le volume d'expansion (19) vaut entre 2 % et 15 % du volume de système (18).

7. Véhicule automobile comprenant un système RCS (11) selon l'une quelconque des revendications 1 à 6.
